(19) **Europäisches Patentamt European Patent Office Office européen des brevets**

(11) **EP 4 302 052 B1**

(12) **FASCICULE DE BREVET EUROPEEN**

(45) Date de publication et mention de la délivrance du brevet:
**11.02.2026 Bulletin 2026/07**

(21) Numéro de dépôt: **22711266.1**

(22) Date de dépôt: **28.02.2022**

(51) Classification Internationale des Brevets (IPC):
**G01C 21/16** *(2006.01)* **G01C 23/00** *(2006.01)*
**G01S 19/15** *(2010.01)* **G05D 1/00** *(2024.01)*

(52) Classification Coopérative des Brevets (CPC):
**G01C 23/00; G01C 21/165; G01S 19/20;**
G01S 19/49

(86) Numéro de dépôt international:
**PCT/FR2022/050357**

(87) Numéro de publication internationale:
**WO 2022/185002 (09.09.2022 Gazette 2022/36)**

(54) **PROCÉDÉ ET CENTRALE DE CALCUL DE DONNÉES DE NAVIGATION INERTIELLE**

VERFAHREN UND EINHEIT ZUR BERECHNUNG VON TRÄGHEITSNAVIGATIONSDATEN

METHOD AND UNIT FOR CALCULATING INERTIAL NAVIGATION DATA

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.03.2021 FR 2101987**

(43) Date de publication de la demande:
**10.01.2024 Bulletin 2024/02**

(73) Titulaire: **Safran Electronics & Defense 75015 Paris (FR)**

(72) Inventeurs:
• **FOLOPPE, Yannick 77550 MOISSY CRAMAYEL (FR)**
• **DELEAUX, Benjamin 77550 MOISSY-CRAMAYEL (FR)**

(74) Mandataire: **Casalonga Casalonga & Partners Bayerstraße 71/73 80335 München (DE)**

(56) Documents cités:
**EP-A2- 2 685 218    US-A- 5 760 737**

**Description**

*Domaine technique*

La présente invention concerne les centrales de navigation inertielle et concerne plus particulièrement un procédé et une centrale de calcul de données de navigation inertielle.

*Etat de la technique antérieure*

Les centrales de navigation inertielle sont par exemple, mais non exclusivement, destinées à être utilisées pour la géolocalisation d'aéronefs, de bateaux, de véhicules terrestres, ... pour la conduite de tirs, ou la désignation de cibles.
De nombreux travaux ont été effectués pour l'amélioration de la précision des centrales inertielles de navigation.
Les travaux d'amélioration sont fondés essentiellement sur l'amélioration des précisions de mesure des capteurs inertiels, tels que des accéléromètres et des gyroscopes, ou sur la fusion ou l'hybridation des données inertielles avec des données provenant d'autres capteurs ou avec des modèles comportementaux complémentaires.
La fusion ou l'hybridation de données inertielles et de données provenant d'autres capteurs permet souvent d'améliorer considérablement les précisions typiques de géolocalisation d'une centrale inertielle de navigation.
En revanche, l'hybridation des données ne permet souvent pas de calculer un indicateur statistique de précision des erreurs de géolocalisation fiable.
Pour qu'un tel indicateur de précision d'erreurs de géolocalisation soit fiable, il faut pour cela connaître la statistique des erreurs des capteurs considérés.
Ceci est généralement le cas pour les capteurs inertiels dont les fabricants peuvent garantir des statistiques d'erreurs en production. Mais ce n'est en revanche pas nécessairement le cas en ce qui concerne les autres capteurs utilisés dans les hybridations de données.
En effet, ces techniques de fusion de données s'appuient souvent sur des modèles comportementaux du véhicule, en l'espèce de l'aéronef, ou de la scène observée, ou encore de bases de données limitées, ce qui ne permet pas d'associer une statistique d'erreur fiable à ce type de modèle. Par ailleurs, les techniques de fusion de données, bien que performantes, sont généralement non sécurisées et ne permettent pas de garantir une statistique d'erreurs dans des cas de dysfonctionnements, qui ne sont pas dus à des pannes des capteurs, mais à des emplois non robustes, c'est-à-dire en dehors des plages de fonctionnement sécurisées.
Dans ces cas, il ne suffit pas d'associer plusieurs centrales inertielles redondantes car il s'agit d'un cas dysfonctionnel commun au système de navigation intégré dans le véhicule.
Par ailleurs, les données de géolocalisation des centrales de navigation peuvent être utilisées dans des chaînes fonctionnelles critiques, que ce soit par exemple pour la conduite autonome d'un véhicule, tel qu'un drone, un aéronef, un train, un véhicule automobile, un bateau, un sous-marin, ..., ou encore la conduite d'un tir de canon ou la désignation de cible dans un cas d'emploi militaire.
Dans ces cas, il est nécessaire de pouvoir certifier la centrale de navigation avec un niveau de criticité suffisant en face du risque de sûreté associé, et de pouvoir fournir une limite statistique des données de géolocalisation avec une probabilité d'avoir une erreur de navigation en dehors de cette limite, qui soit compatible avec les exigences de sûreté de la mission.
On connaît, dans l'état de la technique, et en particulier dans le domaine de l'aéronautique, des centrales inertielles de navigation utilisant une hybridation avec radionavigation et assurant la fusion de données inertielles avec des données de géolocalisation provenant de systèmes GPS, GLONASS, ...
Les statistiques d'erreurs sont définies dans le document GLOBAL POSITIONING SYSTEM STANDARD POSITIONING SERVICE PERFORMANCE STANDARD [DoD & GPS NavSTAR - 2020], en ce qui concerne le GPS, par exemple, et sont utilisées pour définir des rayons de protection d'erreurs de position de la navigation inertielle hybridée GPS, même en cas de panne d'un ou de plusieurs satellites.
On pourra également se référer au document US 5, 760, 737 ou au document WO 2012 031940 qui décrivent des exemples d'applications de cette technique d'hybridation avec radionavigation.
Mais ces techniques de calcul de rayon de protection des erreurs de positions ne sont valables qu'en cas d'emploi avec un système de positionnement global GPS et ne traitent pas des problématiques de type erreur de multitrajet au sol, leurrage, voire cas d'emploi sans signal GNSS (brouillage permanent, ...).

*Exposé de l'invention*

Le but de l'invention est donc de pallier les inconvénients précités et de fournir un procédé et une centrale de calcul de données de navigation inertielle qui soient capables de délivrer des données de géolocalisation certifiées en fournissant des données de géolocalisation avec un indicateur de précision associé à une probabilité d'erreur.

Un autre but de l'invention est d'utiliser des données provenant d'une navigation inertielle hybride non certifiée dans une chaîne fonctionnelle de navigation inertielle critique.

L'invention a donc pour objet, selon un premier aspect, un procédé de calcul de données de navigation inertielle selon la revendication, dans lequel :

- on acquiert des données de navigation, et
- on calcule des valeurs de navigation hybrides à partir de ces données de navigation.

Selon ce procédé, on calcule des valeurs de navigation certifiées, indépendamment des valeurs de navigation hybrides, lesdites valeurs de navigation certifiées étant certifiées avec une limite d'erreur de géolocalisation.

On calcule, pour les valeurs de navigation certifiées, une première limite d'erreur de géolocalisation admissible correspondant à une géolocalisation avec une probabilité d'erreurs prédéterminée.

L'invention permet ainsi de calculer, en parallèle d'une navigation inertielle hybride performante mais non certifiée et sans limite de protection fiable des erreurs, fondée sur l'hybridation des données inertielles, une navigation inertielle plus simple et certifiée, qui permet de calculer une limite de protection fiable des données de navigation inertielle hybride, sans avoir à certifier cette navigation hybride. Par limite de protection, on entend une limite statistique des données de géolocalisation avec une probabilité d'avoir une erreur de navigation en dehors de cette limite.

Les valeurs de navigation hybrides sont certifiées en calculant une limite de protection basée sur une comparaison avec une navigation inertielle sécurisée et certifiée, non impactée par des capteurs externes ou modèles mathématiques comportementaux incohérents.

Ainsi, les valeurs de navigation hybride peuvent être intégrées et exploitées dans une chaîne fonctionnelle critique certifiée.

On calcule, pour les valeurs de navigation hybride, une deuxième limite d'erreur de géolocalisation admissible à partir de la première limite d'erreur de géolocalisation et d'un écart entre les valeurs de géolocalisation hybrides et les valeurs de géolocalisation certifiées.

Selon une autre caractéristique du procédé selon l'invention, on calcule un statut de validité des valeurs de navigation hybrides par comparaison avec des valeurs de seuil respectives.

Dans un mode de mise en œuvre, lors du calcul des valeurs de navigation certifiées, on utilise un filtre de Kalman pour le calcul de covariances d'erreur à partir des données de navigation.

Par exemple, le filtre de Kalman est un filtre de Kalman invariant.

Selon encore une autre caractéristique du procédé selon l'invention, on procède à un recalage à vitesse nulle d'un étage de navigation inertielle apte à calculer les valeurs de navigation certifiées.

On peut prévoir que les valeurs de navigation hybrides soient calculées à partir de données inertielles issues de capteurs, notamment de trois gyroscopes et de trois accéléromètres, dans trois directions de l'espace, et de données additionnelles, notamment de modèles de déplacement.

L'invention a également pour objet une centrale de navigation inertielle selon la revendication 7, comprenant une unité d'acquisition de données de navigation et un premier étage de navigation apte à calculer des valeurs de navigation hybrides par fusion de données de navigation.

Cette centrale comporte en outre un deuxième étage de navigation apte à calculer des valeurs de navigation certifiées, indépendamment des valeurs de navigation hybrides, lesdites valeurs de navigation certifiées étant certifiées avec une limite d'erreur de géolocalisation.

### Brève description des dessins

D'autres buts, caractéristiques et avantages de l'invention apparaîtront à la lecture de la description suivante, donnée à titre d'exemple nullement limitatif et faite en référence aux dessins annexés sur lesquels :

[Fig 1] est un schéma de l'architecture matérielle d'une centrale de navigation inertielle conforme à l'invention ;
[Fig 3] illustre les principales étapes d'un procédé de calcul de données de navigation inertielle conforme à l'invention

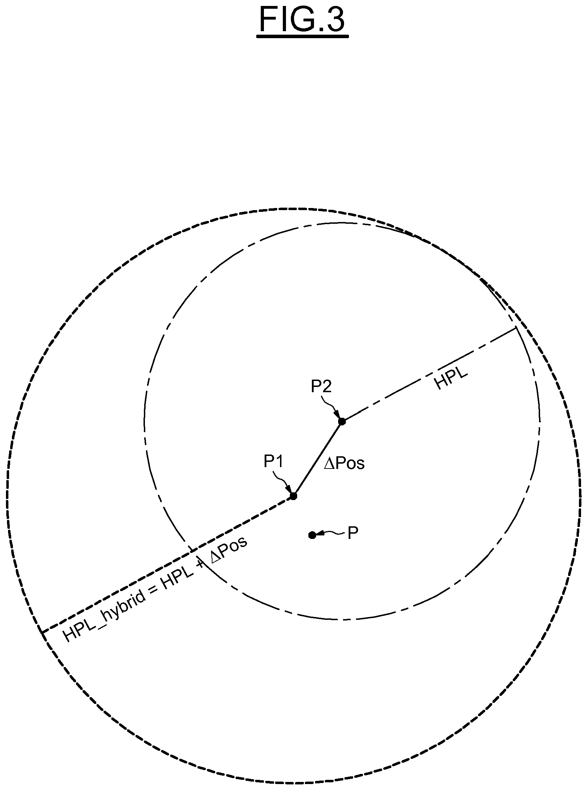

[Fig 3] montre un schéma illustrant les première et deuxième données de navigation avec leur limite d'erreur de géolocalisation admissible sous la forme de cercles de protection limite de l'erreur de position ; et

### Exposé détaillé d'au moins un mode de réalisation de l'invention

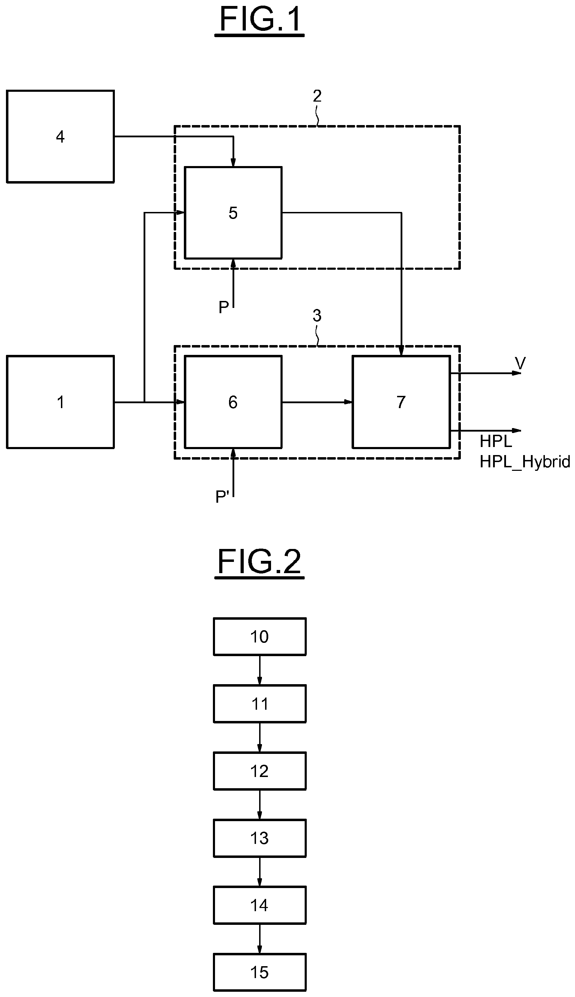

On se réfère tout d'abord à la figure 1 qui illustre schématiquement l'architecture d'une centrale de navigation inertielle conforme à l'invention.

Cette centrale comporte une unité UMI 1 d'acquisition de données navigation inertielles comprenant des capteurs de mesure, par exemple trois gyroscopes et trois accéléromètres délivrant des données inertielles dans trois directions de l'espace, un premier étage de navigation hybridée 2 destiné à calculer des valeurs de navigation inertielle hybrides à partir des données de navigation inertielles délivrées par l'unité d'acquisition 1 et par des capteurs complémentaires ou modèles comportementaux 4 fournissant des données de navigation complémentaires, telles que des données de géolocalisation GPS, des données de distances parcourues, un modèle de déplacement du véhicule, ... et un deuxième étage de navigation 3 fournissant des valeurs de navigation sécurisées. Les premier et deuxième étages de navigation inertielle sont chacun constitués par un calculateur dûment programmé pour mettre en œuvre les fonctions qui vont être décrites ci-après. Ces calculateurs peuvent toutefois être formés par des partitions de calcul d'un même calculateur.

Le premier et le deuxième étages de calcul assurent précisément le calcul de valeurs de données de navigation

Le premier étage de navigation inertielle 2 assure un calcul des données de navigation hybrides, par exemple la position, la vitesse et l'altitude, en trois dimensions par hybridation, c'est-à-dire par fusion des données délivrées par l'unité 1 d'acquisition de données inertielles et des données d'aide externes fournies par les capteurs ou les modèles comportementaux 4.

Ce premier étage de calcul comporte un calculateur 5, qui assure le calcul de ces données de navigation hybride. Comme cela sera décrit en détail par la suite, il reçoit également des données de recalage de position et d'initialisation P.

Le deuxième étage de calcul comporte un calculateur 6, qui assure le calcul des données de navigation certifiées indépendamment des données de navigation hybrides fournies par l'unité d'acquisition 1 et un module de calcul additionnel 7 destiné au calcul de limites de protection des erreurs de géolocalisation. Le calculateur 6 reçoit, en entrée, des données de réglage de position, de recalage à vitesse nulle et d'initialisation P'.

Le calcul de la navigation hybride est une fonction permettant en premier lieu de calculer une solution de géolocalisation inertielle (position 3D, vitesse 3D, attitudes 3D) à l'aide de la fusion des mesures de l'UMI et de données d'aides externes ou modèles comportementaux du porteur (récepteur radionavigation, odomètre et modèle de déplacement véhicule, capteur loch (pour un porteur marine), recalage à vitesse nulle (ZUPT), capteur optique, lidar etc...) par exemple à l'aide de techniques telles que l'intégration d'une navigation inertielle couplé à un filtre de Kalman qui permet de calculer des covariances d'erreurs à partir des caractéristiques des capteurs inertiels et des capteurs d'aide ou encore à l'aide d'autres techniques telles que du filtrage particulaire ou réseaux de neurones et intelligence artificielle..

Le calcul de la navigation hybride est une fonction permettant en second lieu d'estimer la matrice 3x3 de rotation de passage du repère géographique local « North-East-Down » [N] au repère « Body » [B] lié au véhicule :

$$\widehat{C_N^B}_{\text{hybrid}}$$

la notation $\widehat{(\ )}$ désignant une estimation de la grandeur (), $\widehat{(\ )}$ étant donc entaché d'erreur

Il s'agit encore d'une fonction permettant l'estimation des composantes de vitesses du véhicule $\widehat{\underline{V^N}}_{\text{hybrid}}$ dans le repère géographique local « North-East-Down » [N], l'estimation des coordonnées de position horizontale du véhicule exprimées selon le modèle ellipsoïde WGS84, par exemple la longitude estimée $\hat{G}_{\text{hybrid}}$ et la latitude estimée $\hat{L}_{\text{hybrid}}$, l'estimation $\hat{h}_{\text{hybrid}}$ de l'altitude du véhicule exprimée par rapport au géoïde.

Le calcul de la navigation hybride assure également le calcul d'une matrice de covariance des erreurs de géolocalisation si un filtre de Kalman est utilisé, s'appuyant sur la modélisation des erreurs de géolocalisation. Des erreurs de géolocalisation de la navigation hybride sont en outre définies par modélisation mathématique.

Il s'agit, par exemple d'erreurs d'angle, dans 3 dimensions, de la matrice $\widehat{C_N^B}_{\text{hybrid}}$ suivante, projetée dans le repère Body [B] :

$$\underline{\varphi^B}_{\text{hybrid}} = \begin{pmatrix} \varphi_{X_{B\,\text{hybrid}}} \\ \varphi_{Y_{B\,\text{hybrid}}} \\ \varphi_{Z_{B\,\text{hybrid}}} \end{pmatrix},$$

définie par les relations suivantes :

$$\underline{\varphi^B}_{\text{hybrid}} = logSO3\left( C_N^B \cdot \left( \widehat{C_N^B}_{\text{hybrid}} \right)^T \right)$$

$$expSO3\left(\left(\underline{\varphi^B}_{\text{hybrid}}\times\right)\right) = C_N^B.\left(\widehat{C_N^B}_{\text{hybrid}}\right)^T$$

Avec $\left(\underline{Vect^B}\times\right) = \begin{pmatrix} 0 & -Vect_{Z_B} & Vect_{Y_B} \\ Vect_{Z_B} & 0 & -Vect_{X_B} \\ -Vect_{Y_B} & Vect_{X_B} & 0 \end{pmatrix}$ la matrice antisymétrique 3x3 du vecteur

$\underline{Vect^B}$ exprimé dans le repère [B] ;

Et où :

« *logSO3* » est la carte logarithmique du groupe des matrices de rotation SO(3) vers les vecteurs de rotations R3 (R au sens de l'ensemble des réels) et
« *expSO3* » est la carte exponentielle des vecteurs de rotation R3 du groupe des matrices de rotation SO(3), SO(3) étant le groupe spécial orthogonal des matrices carrées de dimension 3

Les estimations des erreurs de vitesses tridimensionnelles, entachées d'erreur, délivrées par le premier étage de navigation hybridée 2, et exprimées dans le repère géographique local [N] par $\underline{\widetilde{V^N}}_{\text{hybrid}} = \begin{pmatrix} \widetilde{V_{X}}_{N\text{ hybrid}} \\ \widetilde{V_{Y}}_{N\text{ hybrid}} \\ \widetilde{V_{Z}}_{N\text{ hybrid}} \end{pmatrix}$, sont définies par la relation suivante :

$$\underline{\widetilde{V^N}}_{\text{hybrid}} = \underline{V^N} - \underline{\widehat{V^N}}_{\text{hybrid}}$$

Les erreurs de position horizontale bidimensionnelles exprimées dans le plan « North-East » du repère géographique local [N] : $\widetilde{r_X}_{N\text{ hybrid}}$ et $\widetilde{r_Y}_{N\text{ hybrid}}$, sont définies par les relations suivantes :

$$\widetilde{r_X}_{N\text{ hybrid}} = \left(L - \hat{L}_{\text{hybrid}}\right).\left(R_{X_N}(L) + h\right)$$

$$\widetilde{r_Y}_{N\text{ hybrid}} = \left(G - \hat{G}_{\text{hybrid}}\right).\cos(L).\left(R_{Y_N}(L) + h\right)$$

On peut également définir l'erreur de position horizontale radiale comme étant la norme de ces deux composantes

$$\widetilde{r_{horz}}_{\text{hybrid}} = \sqrt{\left(\widetilde{r_X}_{N\text{ hybrid}}\right)^2 + \left(\widetilde{r_Y}_{N\text{ hybrid}}\right)^2}$$

Avec $R_{X_N}(L)$ le rayon terrestre selon le modèle WGS 84 dans la direction Nord
Avec $R_{Y_N}(L)$ le rayon terrestre selon le modèle WGS 84 dans la direction Est
Les erreurs d'altitude délivrées par le premier étage de navigation inertielle hybridée 2 qui correspondent à l'erreur de position $\tilde{h}_{\text{safe}}$ selon l'axe vertical du repère géographique local [N] sont définies par

$$\tilde{h}_{\text{hybrid}} = h - \hat{h}_{\text{hybrid}}$$

Cette fusion de données permet d'améliorer la précision de la géolocalisation en réduisant les erreurs présentées ci-dessus, d'estimer et de compenser des erreurs des capteurs inertiels, d'estimer et de compenser des erreurs des aides externes, et d'estimer un indicateur statistique de performance, par exemple une matrice de covariance des erreurs d'un filtre de Kalman.

En ce qui concerne le deuxième étage de navigation 3, le calcul de la navigation certifiée, appelée sécurisée, est une fonction permettant de calculer une solution de géolocalisation inertielle (position 3D, vitesse 3D, attitudes 3D) à l'aide de la fusion des mesures de l'unité UMI 1 et de données d'aides externes sécurisées, par exemple des données de recalage à vitesse nulle à l'arrêt du véhicule, ou recalage ZUPT, sécurisé par un indicateur d'arrêt transmis au système supposé être au niveau adéquat de sureté de fonctionnement ; des données de recalage de position ponctuel ou tout recalage utilisant un capteur intègre pour lequel dont on sait associer une probabilité de défaillance statistique et dont on sait borner les erreurs, hors défaillance, statistiquement et indépendamment des cas d'emplois considérés.

Ces calculs de fusion de données sont réalisés grâce à l'intégration d'une navigation inertielle couplée à un filtre de Kalman qui permet de calculer des covariances d'erreurs à partir des caractéristiques des capteurs inertiels.

Le deuxième étage de calcule de navigation 3 assure le calcul de l'estimation de la matrice 3x3 de rotation de passage du repère géographique local « North-East-Down » [N] au repère « Body » [B] lié au véhicule :

$$\widehat{C^B_N}_{\text{safe}}$$

La notation $\widehat{(\,)}$ désignant une estimation de la grandeur (), $\widehat{(\,)}$ étant donc entaché d'erreur

Il assure en outre l'estimation des composantes tridimensionnelles de la vitesse $\widehat{V^N}_{\text{safe}}$ du véhicule dans le repère géographique local « North-East-Down » [N], ainsi que l'estimation des coordonnées de position horizontale du véhicule exprimées selon le modèle ellipsoïde WGS84 par exemple la longitude estimée $\hat{G}_{\text{safe}}$ et la latitude estimée $\hat{L}_{\text{safe}}$

Le deuxième étage de calcule de navigation 3 calcul en outre l'estimation de l'altitude du véhicule $\hat{h}_{safe}$ exprimée par rapport au géoïde, ainsi que le calcul d'une matrice de covariance des erreurs de géolocalisation fournie par le filtre de Kalman s'appuyant sur la modélisation des erreurs de géolocalisation.

Cette matrice « $P_{\text{safe}}$ » de dimension 9x9 représente l'estimation des covariances des 9 erreurs de géolocalisation choisies, à savoir :

Les erreurs d'angle tridimensionnelles de la matrice $\widehat{C^B_N}_{\text{safe}}$ projetées dans le repère Body [B] :

$$\underline{\varphi^B}_{\text{safe}} = \begin{pmatrix} \varphi_{X_{B\,\text{safe}}} \\ \varphi_{Y_{B\,\text{safe}}} \\ \varphi_{Z_{B\,\text{safe}}} \end{pmatrix},$$

définies par

$$\underline{\varphi^B}_{\text{safe}} = logSO3\left(C^B_N . \left(\widehat{C^B_N}_{\text{safe}}\right)^T\right)$$

$$expSO3\left(\left(\underline{\varphi^B}_{\text{safe}} \times\right)\right) = C^B_N . \left(\widehat{C^B_N}_{\text{safe}}\right)^T$$

Les erreurs de vitesse tridimensionnelles exprimées dans le repère géographique local [N] :

$$\underline{\widetilde{V^N}}_{\text{safe}} = \begin{pmatrix} \widetilde{V_{X_{N\,\text{safe}}}} \\ \widetilde{V_{Y_{N\,\text{safe}}}} \\ \widetilde{V_{Z_{N\,\text{safe}}}} \end{pmatrix},$$

définies par

$$\widetilde{\underline{V^N}}_{\text{safe}} = \underline{V^N} - \widehat{\underline{V^N}}_{\text{safe}}$$

Les erreurs de position horizontale bidimensionnelles exprimées dans le plan « North-East » du repère géographique local [N] : $\widetilde{r}_{X_N\,\text{safe}}$ et $\widetilde{r}_{Y_N\,\text{safe}}$, définies par :

$$\widetilde{r}_{X_N\,\text{safe}} = \left(L - \hat{L}_{\text{safe}}\right).\left(R_{X_N}(L) + h\right)$$

et

$$\widetilde{r}_{Y_N\,\text{safe}} = \left(G - \hat{G}_{\text{safe}}\right).\cos(L).\left(R_{Y_N}(L) + h\right)$$

Les erreurs d'altitude qui correspond à l'erreur de position selon l'axe vertical du repère géographique local [N] : $\tilde{h}_{\text{safe}}$, définies par

$$\tilde{h}_{\text{safe}} = h - \hat{h}_{\text{safe}}$$

Il est également possible de définir l'erreur de position horizontale radiale comme étant la norme de ces deux composantes :

$$\widetilde{r_{horz}}_{\text{safe}} = \sqrt{\left(\widetilde{r_{X_N}}_{\text{safe}}\right)^2 + \left(\widetilde{r_{Y_N}}_{\text{safe}}\right)^2}$$

Avec :

$R_{X_N}(L)$ le rayon terrestre selon le modèle WGS 84 dans la direction Nord, et
$R_{Y_N}(L)$ le rayon terrestre selon le modèle WGS 84 dans la direction Est

Cette fusion de données permet d'améliorer la précision de la géolocalisation en réduisant les erreurs présentées ci-dessus, d'estimer et de compenser des erreurs des capteurs inertiels, d'estimer un indicateur statistique de performance, par exemple une matrice de covariance des erreurs d'un filtre de Kalman, qui n'est pas entaché d'erreurs liées à des mauvais cas d'emplois des aides externes puisqu'aucune aide externe complexe et non sécurisée n'est utilisée. Cet indicateur est uniquement entaché d'erreurs liées à une défaillance du système mais cette défaillance est connue et faible et correspond à la probabilité de défaillance non détectée du système.

Cette géolocalisation est simple, sécurisée mais tout de même performante, à l'aide des recalages ZUPT ou de position ponctuels, pour permettre un rayon de protection sécurisé exploitable en opération. Ces recalages ponctuels permettent de maintenir une précision de géolocalisation sécurisée acceptable pour la mission.

Le deuxième étage de navigation 3 assure par ailleurs le calcul de la limite de protection des données de géolocalisation et de validité des données hybrides. Ce calcul permet en particulier de définir une limite statistique des données de géolocalisation avec une probabilité d'avoir une erreur de navigation en dehors de cette limite.

Cette limite de protection, notée « PL », des erreurs des données de géolocalisation de la navigation sécurisée est calculée en utilisant la matrice de covariance « Psafe » des erreurs de géolocalisation du filtre de navigation sécurisé (matrice de covariance fournie par le filtre de Kalman). Elle contient les variances des erreurs de géolocalisation et leurs corrélations entre elles.

Cette matrice de covariance est le résultat de la propagation des caractéristiques d'erreurs des senseurs inertiels (statistique gaussienne des bruits, erreurs de biais, erreurs de facteurs d'échelle des senseurs, erreurs de mésalignements entre les senseurs, ...) vers les erreurs de géolocalisation et des prises en compte des recalages vitesse nulle (ZUPT) ou de position absolue par le filtre de navigation

La probabilité statistique d'être en en dehors de cette limite de protection en l'absence de panne d'un des senseurs inertiels, notée « Proba » est par exemple :

$$\mathrm{Proba} = 1\mathrm{e}\text{-}5$$

Dans ce qui suit, des exemples de calcul de limite de protection vont être détaillés.

En premier lieu, la limite de protection peut être définie par un cercle de protection limite de l'erreur de position horizontale :

$$HPL(Proba) = Q_{inv}(Proba, 2).\sqrt{VAR_{MAX}}$$

Où

$VAR_{max}$ est la valeur propre maximale de la matrice de covariance 2x2 « $P_{safe}\left(\left[\widetilde{r_{X_N}}_{\text{safe}}, \widetilde{r_{Y_N}}_{\text{safe}}\right], \left[\widetilde{r_{X_N}}_{\text{safe}}, \widetilde{r_{Y_N}}_{\text{safe}}\right]\right)$ » des erreurs de position horizontale Nord et Est du filtre de Kalman de la navigation sécurisée

$Qi_{nv}(Proba, N)$ est l'inverse de la fonction cumulative de distribution de la variable aléatoire gaussienne normée de dimension N et décorrélée pour une probabilité < Proba

Par exemple, pour N = 2, $\quad Q_{inv}(Proba, 2) = \sqrt{2.\ln\left(\frac{1}{Proba}\right)}$

ln(x) = logarithme népérien évalué en x

Pour N = 2, Proba = 1e-5et Qinv(1e-5 , 2) soit environ 4.7985

En l'absence de panne de la centrale de navigation, cette limite HPL(Proba) ainsi calculée est supérieure à $\widetilde{r_{horz}}_{\text{safe}}$ avec une probabilité au moins égale à « 1-Proba »

En l'absence de panne de la centrale de navigation, ce rayon de protection limite HPL(Proba) ainsi calculé, centré sur la position horizontale vraie du véhicule doit contenir avec une probabilité au moins égale à « 1-Proba » la position calculée par la navigation sécurisée.

La limite de protection peut également être appliquée à l'erreur de position verticale (altitude) :

$$ZPL(Proba) = Q_{inv}(Proba, 1).\sqrt{P_{safe}(\tilde{h}_{\text{safe}}, \tilde{h}_{\text{safe}})}$$

Où

$P_{\text{safe}}(\tilde{h}_{\text{safe}}, \tilde{h}_{\text{safe}})$ est la variance de l'erreur d'altitude du filtre de Kalman de la navigation sécurisée et

$Qi_{nv}(Proba, N)$ est l'inverse de la fonction cumulative de distribution de la variable aléatoire gaussienne normée de dimension N et décorrélée pour une probabilité < Proba

Par exemple, pour N = 1, $\quad Q_{inv}(Proba, 1) = \sqrt{2}.\,\text{erfcinv}(Proba)$

Où erfcinv est l'inverse de la fonction d'erreur complémentaire de Gauss

Pour N = 1, Proba = 1e-5 et Qinv(1e-5 , 1) ≈ 4.4172

En l'absence de panne de la centrale de navigation, cette limite ZPL(Proba) ainsi calculée est supérieure à $|\tilde{h}_{\text{safe}}|$ avec une probabilité au moins égale à « 1-Proba »

La limite de protection des erreurs peut également être appliquée aux composantes de vitesse nord, Est et verticale dans le repère géographique local :

$$VnPL(Proba) = Q_{inv}(Proba, 1).\sqrt{P_{safe}\left(\widetilde{V_{X_N}}_{\text{safe}}, \widetilde{V_{X_N}}_{\text{safe}}\right)}$$

Où

$P_{safe}\left(\widetilde{V_{X_N}}_{\text{safe}}, \widetilde{V_{X_N}}_{\text{safe}}\right)$ est la variance de l'erreur de vitesse selon l'axe nord du repère géographique local du filtre de Kalman de la navigation sécurisée et

$Qi_{nv}(Proba, N)$ est l'inverse de la fonction cumulative de distribution de la variable aléatoire gaussienne normée de dimension N et décorrélée pour une probabilité < Proba

En l'absence de panne de la centrale de navigation, cette limite VnPL(Proba) ainsi calculée est supérieure à $\left|\widetilde{V_{N_{X}}}_{\text{safe}}\right|$ avec une probabilité au moins égale à « 1-Proba ».

De même pour respectivement les erreurs de vitesse Est et verticale, on a :

$$VePL(Proba) = Q_{inv}(Proba, 1).\sqrt{P_{safe}\left(\widetilde{V_{Y_N}}_{\text{safe}}, \widetilde{V_{Y_N}}_{\text{safe}}\right)}$$

$$VzPL(Proba) = Q_{inv}(Proba, 1).\sqrt{P_{safe}\left(\widetilde{V_{Z_N}}_{\text{safe}}, \widetilde{V_{Z_N}}_{\text{safe}}\right)}$$

La limite de protection des erreurs d'angle tridimensionnelles projetées dans le repère Body [B], qui est un repère d'intérêt pour ces erreurs dans un cas de désignation de cible notamment, de la matrice $\widehat{C_N^B}_{\text{safe}}$, s'écrit :

$$CbxPL(Proba) = Q_{inv}(Proba, 1).\sqrt{P_{safe}\left(\varphi_{X_B}_{\text{safe}}, \varphi_{X_B}_{\text{safe}}\right)}$$

où

$P_{safe}\left(\varphi_{X_B}_{\text{safe}}, \varphi_{X_B}_{\text{safe}}\right)$ est la variance du filtre de Kalman de la navigation sécurisée de la composante selon l'axe x du repère Body [B] des erreurs d'angle de la matrice $\widehat{C_N^B}_{\text{safe}}$ et

$Qi_{nv}(Proba, N)$ est l'inverse de la fonction cumulative de distribution de la variable aléatoire gaussienne normée de dimension N et décorrélée pour une probabilité < Proba

En l'absence de panne de la centrale de navigation, cette limite CbxPL(Proba) ainsi calculée est supérieure à $\left|\varphi_{X_B}_{\text{safe}}\right|$ avec une probabilité au moins égale à « 1-Proba »

De même, pour respectivement les erreurs d'angle projetée dans le repère Body [B] de la matrice $\widehat{C_N^B}_{\text{safe}}$ selon les axes YB et ZB, on a :

$$CbyPL(Proba) = Q_{inv}(Proba, 1).\sqrt{P_{safe}\left(\varphi_{Y_B}_{\text{safe}}, \varphi_{Y_B}_{\text{safe}}\right)}$$

$$CbzPL(Proba) = Q_{inv}(Proba, 1).\sqrt{P_{safe}\left(\varphi_{Z_B}_{\text{safe}}, \varphi_{Z_B}_{\text{safe}}\right)}$$

Le deuxième étage de navigation certifiée 3 assure par ailleurs le calcul d'une limite de protection, noté « PL_hybrid », des erreurs des données de géolocalisation de la navigation hybride en utilisant les limites de protection PL des erreurs des données de géolocalisation de la navigation sécurisée associés à la probabilité « Proba » tel que décrit précédemment, et l'écart entre les données de géolocalisation de la navigation hybride et de la navigation sécurisée.

Diverses limites de protection, qui s'appuient sur les calculs des limites de protection définies pour les données de géolocalisation sécurisée, peuvent être calculées.

On peut en premier lieu calculer un cercle de protection limite de l'erreur de position hybride dans le plan horizontal du repère géographique local :

$$\text{HPL\_hybrid}(\text{Proba}) = \text{HPL}(\text{Proba}) + \Delta Pos$$

Où :

HPL(Proba) est le cercle de protection limite des erreurs de position horizontales de la navigation sécurisée présenté auparavant, et

$$\Delta Pos = \sqrt{\left(d_{X_N}\right)^2 + \left(d_{X_N}\right)^2}$$ est la distance entre les deux positions sécurisées et hybrides dans le plan horizontal du repère géographique local [N],

Avec

$$d_{Y_N} = \left(\hat{L}_{\text{hybrid}} - \hat{L}_{\text{safe}}\right).\left(R_{X_N}\left(\hat{L}_{\text{safe}}\right) + \hat{h}_{\text{safe}}\right)$$

et

$$d_{Y_N} = \left(\hat{G}_{\text{hybrid}} - \hat{G}_{\text{safe}}\right).\cos\left(\hat{L}_{\text{safe}}\right).\left(R_{Y_N}\left(\hat{L}_{\text{safe}}\right) + \hat{h}_{\text{safe}}\right)$$

En l'absence de panne de la centrale de navigation, HPL_hybrid(Proba) ainsi calculé est supérieur à $\widetilde{r_{horz}}_{\text{hybrid}}$ avec une probabilité supérieure ou égale à « 1-Proba »

En effet, par construction (inégalité de Cauchy Schwartz),

$$\widetilde{r_{horz}}_{\text{hybrid}} \leq \widetilde{r_{horz}}_{\text{safe}} + \Delta Pos$$

Or, il y a une probabilité supérieure ou égale à « 1-Proba », par choix de HPL(Proba), que $\widetilde{r_{horz}}_{\text{safe}} \leq HPL(Proba)$.

On sait donc garantir par le choix de HPL_hybrid(Proba) qu'il y a une probabilité supérieure ou égale à « 1-Proba » que $\widetilde{r_{horz}}_{\text{hybrid}} \leq (HPL(Proba) + \Delta Pos) = HPL\_hybrid(Proba)$

En l'absence de panne de la centrale de navigation, ce rayon de protection limite HPL_hybrid(Proba) ainsi calculé, centré sur la position horizontale vraie du véhicule doit contenir avec une probabilité au moins égale à « 1-Proba » la position calculée par la navigation hybride.

On peut en second lieu calculer une limite de protection de l'erreur de position verticale (altitude) hybride :

$$\text{ZPL\_hybrid}(\text{Proba}) = \text{ZPL}(\text{Proba}) + \Delta h$$

Où

HPL(Proba) est le cercle de protection limite des erreurs de position horizontales de la navigation sécurisée présenté auparavant

$\Delta h = |\hat{h}_{\text{hybrid}} - \tilde{h}_{\text{safe}}|$ est la distance entre les deux altitudes sécurisée et hybride.

En l'absence de panne de la centrale de navigation, ZPL_hybrid(Proba) ainsi calculé est supérieur à $|\tilde{h}_{\text{hybrid}}|$ avec une probabilité supérieure ou égale à « 1-Proba »

En effet, par construction (inégalité de Cauchy Schwartz),

$$\left|\tilde{h}_{\text{hybrid}}\right| \leq \left|\tilde{h}_{\text{safe}}\right| + \Delta h$$

Or, il y a une probabilité supérieure ou égale à « 1-Proba », par choix de ZPL(Proba), que $|\tilde{h}_{\text{safe}}| \leq ZPL(Proba)$.

On sait donc garantir par le choix de ZPL_hybrid(Proba) qu'il y a une probabilité supérieure ou égale à « 1-Proba » que $|\tilde{h}_{\text{hybrid}}| \leq (ZPL(Proba) + \Delta h) = ZPL\_hybrid(Proba)$

On peut également calculer une limite de protection des erreurs de vitesse hybride Nord, Est et Verticale dans le repère géographique local.

Par exemple, par le même principe que décrit ci-dessus, on peut définir, pour la limite de protection des erreurs de vitesse hybride Nord une limite de protection de l'erreur $\widetilde{V_{X_{N\,\text{hybrid}}}}$, à partir de la relation :

$$\mathrm{VnPL\_hybrid(Proba)} = \mathrm{VnPL(Proba)} + \Delta \mathrm{Vn}$$

Où:

VnHPL(Proba) est la limite de protection de l'erreur de vitesse selon l'axe nord du repère géographique local [N], et

$\Delta Vn = \left| \widehat{V_{X_{N\,\text{hybrid}}}} - \widehat{V_{X_{N\,\text{safe}}}} \right|$ est l'écart entre les deux vitesses nord sécurisée et hybride

En l'absence de panne de la centrale de navigation, Vn_hybrid(Proba) ainsi calculé est supérieur à $\left| \widehat{V_{X_{N\,\text{hybrid}}}} \right|$ avec une probabilité supérieure ou égale à « 1-Proba »

On peut également définir une limite de protection de l'erreur $\widetilde{V_{Y_{N\,\text{hybrid}}}}$ :

$$\mathrm{VePL\_hybrid(Proba)} = \mathrm{VePL(Proba)} + \Delta \mathrm{Ve}$$

Où :

VeHPL(Proba) est la limite de protection de l'erreur de vitesse selon l'axe Est du repère géographique local [N] ,et

$\Delta Ve = \left| \widehat{V_{Y_{N\,\text{hybrid}}}} - \widehat{V_{Y_{N\,\text{safe}}}} \right| = $ écart entre les deux vitesses Est sécurisée et hybride

En l'absence de panne de la centrale de navigation, Ve_hybrid(Proba) ainsi calculé est supérieur à $\left| \widehat{V_{Y_{N\,\text{hybrid}}}} \right|$ avec une probabilité supérieure ou égale à « 1-Proba »

On peut encore définir une limite de protection de l'erreur $\widetilde{V_{Z_{N\,\text{hybrid}}}}$ :

$$\mathrm{VzPL\_hybrid(Proba)} = \mathrm{VzPL(Proba)} + \Delta \mathrm{Vz}$$

Où :

VzHPL(Proba) est la limite de protection de l'erreur de vitesse selon l'axe vertical du repère géographique local [N] , et

$\Delta Vz = \left| \widehat{V_{Z_{N\,\text{hybrid}}}} - \widehat{V_{Z_{N\,\text{safe}}}} \right|$ ' est l'écart entre les deux vitesses verticales sécurisée et hybride

En l'absence de panne de la centrale de navigation, Vz_hybrid(Proba) ainsi calculé est supérieur à $\left| \widehat{V_{Z_{N\,\text{hybrid}}}} \right|$ avec une probabilité supérieure ou égale à « 1-Proba »

On peut encore calculer une limite de protection des erreurs d'angle tridimensionnelles de la matrice $\widehat{C_{N\,\text{hybrid}}^{B}}$ projetée dans le repère Body [B].

A titre d'exemple, la limite de protection de l'erreur $\varphi_{X_{B\,\text{hybrid}}}$ est :

$$CbxPL\_hybrid(Proba) = CbxPL(Proba) + \left|\Delta\varphi_{X_B}\right|$$

Où :

CbxPL_hybrid(Proba) est la limite de protection de la composante selon XB des erreurs d'angle de la matrice $\widehat{C^{\overline{B}}_N}_{\text{safe}}$ et

$$\underline{\Delta\varphi^B} = \begin{pmatrix} \Delta\varphi_{X_B} \\ \Delta\varphi_{Y_B} \\ \Delta\varphi_{Z_B} \end{pmatrix} = logSO3\left(\widehat{C^B_N}_{\text{hybrid}}.\left(\widehat{C^B_N}_{\text{safe}}\right)^T\right)$$

En l'absence de panne de la centrale de navigation, CbxPL_hybrid(Proba) ainsi calculé est supérieur à $\left|\varphi_{X_{B\,\text{hybrid}}}\right|$ avec une probabilité supérieure ou égale à « 1-Proba »

En effet, on a :

$$C^B_N.\left(\widehat{C^B_N}_{\text{hybrid}}\right)^T = C^B_N.\underbrace{\left(\left(\widehat{C^B_N}_{\text{safe}}\right)^T.\widehat{C^B_N}_{\text{safe}}\right)}_{\text{identité }I_3}.\left(\widehat{C^B_N}_{\text{hybrid}}\right)^T$$
$$= \left(C^B_N.\left(\widehat{C^B_N}_{\text{safe}}\right)^T\right).\left(\widehat{C^B_N}_{\text{safe}}.\left(\widehat{C^B_N}_{\text{hybrid}}\right)^T\right)$$

Soit encore

$$C^B_N.\left(\widehat{C^B_N}_{\text{hybrid}}\right)^T = \left(C^B_N.\left(\widehat{C^B_N}_{\text{safe}}\right)^T\right).\left(\widehat{C^B_N}_{\text{hybrid}}.\left(\widehat{C^B_N}_{\text{safe}}\right)^T\right)^T$$

Et donc

$$expSO3\left(\left(\underline{\varphi^B}_{\text{hybrid}}\times\right)\right) = expSO3\left(\left(\underline{\varphi^B}_{\text{safe}}\times\right)\right).expSO3\left(\left(\underline{\Delta\varphi^B}\times\right)\right)^T$$

$$expSO3\left(\left(\underline{\varphi^B}_{\text{hybrid}}\times\right)\right) = expSO3\left(\left(\underline{\varphi^B}_{\text{safe}}\times\right)\right).expSO3\left(-\left(\underline{\Delta\varphi^B}\times\right)\right)$$

Or pour des angles d'amplitude faible, par exemple de norme inférieure à 10e-3 radian, on a, au premier ordre :

$$expSO3\left(\left(\underline{\varphi^B}_{\text{hybrid}}\times\right)\right) \approx I_3 + \left(\underline{\varphi^B}_{\text{hybrid}}\times\right)$$

$$expSO3\left(-\left(\underline{\Delta\varphi^B}\times\right)\right) \approx I_3 - \left(\underline{\Delta\varphi^B}\times\right)$$

On en déduit pour des angles d'amplitude faible, par exemple de norme inférieure à 10e-3 radian, au premier ordre :

$$I_3 + \left(\underline{\varphi^B}_{\text{hybrid}}\times\right) = I_3 + \left(\underline{\varphi^B}_{\text{safe}}\times\right) - \left(\underline{\Delta\varphi^B}\times\right)$$

Et donc

$$\left(\underline{\varphi^B}_{\text{hybrid}}\times\right)=\left(\underline{\varphi^B}_{\text{safe}}\times\right)-\left(\underline{\Delta\varphi^B}\times\right)=\left(\left(\underline{\varphi^B}_{\text{safe}}-\underline{\Delta\varphi^B}\right)\times\right)$$

Par unicité entre matrice antisymétrique d'un vecteur et ce même vecteur, en en déduit :

$$\underline{\varphi^B}_{\text{hybrid}}=\underline{\varphi^B}_{\text{safe}}-\underline{\Delta\varphi^B}$$

On a alors l'inégalité suivante pour la composante selon XB :

$$\left|\varphi_{X_B\,\text{hybrid}}\right|\leq\left|\varphi_{X_B\,\text{safe}}\right|+\left|\Delta\varphi_{X_B}\right|$$

Or, il y a une probabilité supérieure ou égale à « 1-Proba », par choix de CbxPL(Proba), que

$$\left|\varphi_{X_B\,\text{safe}}\right|\leq CbxPL(Proba)$$

On sait donc garantir par le choix de CbxPL_hybrid(Proba) qu'il y a une probabilité supérieure ou égale à « 1-Proba » que

$$\left|\varphi_{X_B\,\text{hybrid}}\right|\leq\left(CbxPL(Proba)+\left|\Delta\varphi_{X_B}\right|\right)=CbxPL\_hybrid(Proba)$$

De même, les limites de protection des erreurs $\varphi_{Y_B\,\text{hybrid}}$ et $\varphi_{Z_B\,\text{hybrid}}$ sont calculées. Par exemple, en ce qui concerne $\varphi_{Y_B\,\text{hybrid}}$, cette limite est calculée à partir de la relation suivante:

$$CbyPL\_hybrid(Proba)=CbyL(Proba)+\left|\Delta\varphi_{Y_B}\right|$$

Où :

CbyPL_hybrid(Proba) est la limite de protection de la composante selon YB des erreurs d'angle de la matrice $\widehat{C_N^B}_{\text{safe}}$, et

$$\underline{\Delta\varphi^B}=\begin{pmatrix}\Delta\varphi_{X_B}\\\Delta\varphi_{Y_B}\\\Delta\varphi_{Z_B}\end{pmatrix}=logSO3\left(\widehat{C_N^B}_{\text{hybrid}}\cdot\left(\widehat{C_N^B}_{\text{safe}}\right)^T\right)$$

En l'absence de panne de la centrale de navigation, CbyPL_hybrid(Proba) ainsi calculé est supérieur à $\left|\varphi_{Y_B\,\text{hybrid}}\right|$ avec une probabilité supérieure ou égale à « 1-Proba ».

La limite CbzPL_hybrid(Proba) est calculée de manière similaire.

En référence à la figure 2, qui illustre les principales phases d'un procédé de calcul de données de navigation inertielles conforme à l'invention, selon une première étape 10, l'unité d'acquisition de données inertielles 1 acquiert les données en provenance d'au moins trois gyroscopes et d'au moins trois accéléromètres inertiels qui mesurent les rotations inertielles et les forces spécifiques inertielles dans les trois directions de l'espace.

De même, au cours de cette étape 10, les données provenant des autres capteurs 4 sont également acquises.

On notera que les capteurs de l'unité d'acquisition de données inertielles 1 sont développés et certifiés en fonction des contraintes de sécurité requises, en fonction de la criticité des évènements redoutés.

Lors de l'étape 11 suivante, le premier étage de navigation 2 délivre les premières données de navigation par fusion des données inertielles issues de l'unité d'acquisition de données inertielles 4 et de toutes autres données de navigation complémentaires provenant des capteurs additionnels 4.

On notera qu'à l'issue de cette étape 11 de calcul, les données de navigation fournies à l'issue de cette première étape de calcul sont relativement précises mais sont difficiles à certifier.

Lors de l'étape 12 suivante, le deuxième étage de navigation 3 assure le calcul des données de navigation sécurisées à partir, notamment, des covariances d'erreur et à partir des caractéristiques des capteurs inertiels, comme décrit précédemment.

On notera que ces étapes d'acquisition et de calcul sont réalisées en permanence.

Toutefois, il est réalisé des phases de recalage de position, par exemple lors du passage à des endroits connus. On met également en œuvre des phases de recalage à vitesse nulle afin en particulier de recaler les données de vitesse.

Lors de l'étape 13 suivante, on procède à un calcul de limites de protection qui correspond à un niveau d'erreur de protection, pour les premier et deuxième étages de navigation inertielle.

En se référant également à la figure 3, sur laquelle P désigne une position réelle, et P1 et P2 désignent la position calculée par le premier et le deuxième étage de navigation 2 et 3, respectivement, au cours de cette étape, on calcule, comme indiqué précédemment, la limite de protection des erreurs des données de géolocalisation de la navigation sécurisée issue du deuxième étage de navigation inertielle.

Cette limite de protection, notée HPL, constitue ici un cercle de protection limite de l'erreur de géolocalisation centrée sur la position P2 calculée par le deuxième étage de navigation 3.

Lors de l'étape 14 suivante, on calcule la limite de protection des erreurs des données de géolocalisation calculées par le premier étage de navigation 2, tel qu'exposé précédemment.

Cette limite de protection HPL_hybride forme un cercle de protection limite de l'erreur de position fournie par le premier étage de navigation 2, centré sur la position P1 géolocalisée par ce premier étage de navigation et dont le rayon est constitué par la somme de l'écart entre les données de géolocalisation fournies par les premiers et deuxièmes étages de navigation et de la limite de protection HPL calculée lors de l'étape 13 précédente.

Lors de l'étape 15 suivante, on calcule un statut de validité V des premières données de navigation hybrides par comparaison avec des valeurs de seuil respectives.

Tout d'abord, un test de cohérence des données de géolocalisation hybride est préalablement effectué afin de s'assurer de la cohérence de la donnée, tel que la validité déclarée des données, le format de la donnée, l'intervalle de la donnée, etc.... Dans le cas contraire un statut d'invalidité de la donnée est émis.

Par ailleurs, les écarts mesurés entre la navigation hybride et la navigation optimale calculés précédemment sont également comparés à des seuils afin de lever des statuts d'anomalie vers l'utilisateur et l'informer de ne plus considérer les données de navigation hybride.

On peut par exemple utiliser une fraction des limites de protections « PL » des erreurs de la navigation sécurisée comme seuil de levée d'anomalie.

Le calcul de validité peut être du type :

Si test de cohérence des données de géolocalisation hybride est invalide

Ou si $\Delta$Pos > Seuil_pos

Ou si $\Delta$h > Seuil _Z

Ou si $\Delta$Vn > Seuil _Vn

Etc...

Alors les données de la navigation hybride sont invalides

Sinon les données de la navigation hybride sont valides

Fin Si

On notera que les calculs mis en œuvre au sein de la centrale de navigation sont réalisés au sein de deux calculateurs séparés, ou de partitions d'un calculateur, assurant respectivement le calcul des données de navigation hybride et le calcul des données de navigation sécurisée, ce qui permet de ne pas contraindre les couches basses logicielles et matérielles de l'organe de calcul de la navigation hybride qui n'est pas dans la chaine fonctionnelle critique de l'invention.

La solution proposée permet d'utiliser les données d'une navigation hybride non certifiée quelconque dans une chaine fonctionnelle critique grâce à la sécurisation de ces données par une partition logicielle ou matérielle certifiée qui calcule pour ces données de navigation non certifiée une limite de protection basée sur la comparaison avec une navigation sécurisée, non impactée par des capteurs externes ou modèles mathématiques comportementaux incohérents et certifiée.

Ainsi, toute technique d'hybridation de la navigation (filtre de Kalman complexe, filtre particulaire, réseau de neurone, intelligence artificielle, ...) peut être utilisée sans avoir à certifier ces traitements, tout en garantissant un niveau d'intégrité des données grâce au calcul des limites de protection fiables et certifiées.

Les données de la navigation sécurisée ainsi que leurs limites de protection sont également disponibles en solution de secours, utilisées par exemple lorsque l'écart entre les données de géolocalisation de la navigation hybride et sécurisée est supérieur à un seuil par exemple.

**Revendications**

1. Procédé de calcul de données de navigation inertielle, dans lequel :

   - on acquiert des données de navigation ; et
   - on calcule des valeurs de navigation hybrides à partir de ces données de navigation,

   **caractérisé en ce que** :
   on calcule des valeurs de navigation certifiées, indépendamment des valeurs de navigation hybrides, lesdites valeurs de navigation certifiées étant certifiées avec une limite d'erreur de géolocalisation.
   dans lequel on calcule, pour les valeurs de navigation certifiées, une première limite d'erreur de géolocalisation admissible correspondant à une géolocalisation avec une probabilité d'erreur prédéterminée et dans lequel on calcule, pour les valeurs de navigation hybrides, une deuxième limite d'erreur de géolocalisation admissible à partir de la première limite d'erreur de géolocalisation et d'un écart entre les valeurs de navigation hybrides et les valeurs de navigation certifiées.

2. Procédé selon la revendication 1 , dans lequel on calcule un statut de validité (V) des valeurs de navigation hybrides par comparaison avec des valeurs de seuil respectives.

3. Procédé selon l'une des revendications 1 et 2, dans lequel, lors du calcul des valeurs de navigation certifiées, on utilise un filtre de Kalman pour le calcul de covariances d'erreur à partir des données de navigation.

4. Procédé selon la revendication 3, dans lequel le filtre de Kalman est un filtre de Kalman invariant.

5. Procédé selon l'une quelconque des revendications 1 à 4, dans lequel on procède à un recalage à vitesse nulle de l'étage de navigation inertielle apte à calculer les valeurs de navigation certifiées.

6. Procédé selon l'une quelconque des revendications 1 à 5, dans lequel les valeurs de navigation hybrides sont calculées à partir des données inertielles issues de capteurs de mesure, notamment d'au moins trois gyroscopes et d'au moins trois accéléromètres, dans trois directions de l'espace, et de données additionnelles, notamment de modèles de déplacement.

7. Centrale de navigation inertielle, comprenant une unité d'acquisition de données de navigation (1) et un premier étage de navigation (2) apte à calculer des valeurs de navigation hybrides par fusion de données de navigation, **caractérisée en ce qu'**elle comporte en outre un deuxième étage de navigation (3) apte à calculer des valeurs de navigation certifiées, indépendamment des valeurs de navigation hybrides, lesdites valeurs de navigation certifiées étant certifiées avec une limite d'erreur de géolocalisation, et **en ce que** le deuxième étage de navigation calcule une première limite d'erreur de géolocalisation admissible correspondant à une géolocalisation avec une probabilité d'erreur prédéterminée et une deuxième limite d'erreur de géolocalisation admissible à partir de la première limite d'erreur de géolocalisation et d'un écart entre les valeurs de navigation hybrides et les valeurs de navigation certifiées.

**Patentansprüche**

1. Verfahren zur Berechnung von Trägheitsnavigationsdaten, wobei:

   - Navigationsdaten erfasst werden; und
   - aus diesen Navigationsdaten hybride Navigationswerte berechnet werden,

   **dadurch gekennzeichnet, dass**:

   unabhängig von den hybriden Navigationswerten zertifizierte Navigationswerte berechnet werden, wobei die zertifizierten Navigationswerte mit einer Geolokalisierungsfehlergrenze zertifiziert sind.
   wobei für die zertifizierten Navigationswerte eine erste zulässige Geolokalisierungsfehlergrenze berechnet wird, die einer Geolokalisierung mit einer vorbestimmten Fehlerwahrscheinlichkeit entspricht, und wobei für die hybriden Navigationswerte eine zweite zulässige Geolokalisierungsfehlergrenze aus der ersten Geolokalisierungsfehlergrenze und einer Abweichung zwischen den hybriden Navigationswerten und den zertifizierten Navigationswerten berechnet wird.

**2.** Verfahren nach Anspruch 1, wobei ein Gültigkeitsstatus (V) der hybriden Navigationswerte durch Vergleich mit jeweiligen Schwellwerten berechnet wird.

**3.** Verfahren nach einem der Ansprüche 1 und 2, wobei bei der Berechnung der zertifizierten Navigationswerte ein Kalman-Filter zur Berechnung von Fehlerkovarianzen aus den Navigationsdaten verwendet wird.

**4.** Verfahren nach Anspruch 3, wobei der Kalman-Filter ein invarianter Kalman-Filter ist.

**5.** Verfahren nach einem der Ansprüche 1 bis 4, wobei eine Neueinstellung der Trägheitsnavigationsstufe bei Nullgeschwindigkeit erfolgt, die geeignet ist, die zertifizierten Navigationswerte zu berechnen.

**6.** Verfahren nach einem der Ansprüche 1 bis 5, wobei die hybriden Navigationswerte aus den Trägheitsdaten von Messsensoren, insbesondere von mindestens drei Gyroskopen und mindestens drei Beschleunigungsmessern, in drei Raumrichtungen und zusätzlichen Daten, insbesondere von Bewegungsmustern, berechnet werden.

**7.** Trägheitsnavigationszentrale, umfassend eine Navigationsdatenerfassungseinheit (1) und eine erste Navigationsstufe (2), die geeignet ist, hybride Navigationswerte durch Fusion von Navigationsdaten zu berechnen, **dadurch gekennzeichnet, dass** sie ferner eine zweite Navigationsstufe (3) umfasst, die geeignet ist, unabhängig von den hybriden Navigationswerten zertifizierte Navigationswerte zu berechnen, wobei die zertifizierten Navigationswerte mit einer Geolokalisierungsfehlergrenze zertifiziert sind, und dass die zweite Navigationsstufe eine erste zulässige Geolokalisierungsfehlergrenze, die einer Geolokalisierung mit einer vorbestimmten Fehlerwahrscheinlichkeit entspricht, und eine zweite zulässige Geolokalisierungsfehlergrenze aus der ersten Geolokalisierungsfehlergrenze und einer Abweichung zwischen den hybriden Navigationswerten und den zertifizierten Navigationswerten berechnet.

**Claims**

**1.** Method for calculating inertial navigation data, wherein:

- navigation data are collected; and
- hybrid navigation values are calculated from these navigation data,

**characterised in that**:

certified navigation values are calculated independently of hybrid navigation values, said certified navigation values being certified with a geolocation error limit.
Wherein a first permissible geolocation error limit is calculated for the certified navigation values, corresponding to a geolocation with a predetermined probability of error, and wherein a second permissible geolocation error limit is calculated for the hybrid navigation values based on the first geolocation error limit and a deviation between the hybrid navigation values and the certified navigation values.

**2.** Method according to claim 1, wherein a validity status (V) of the hybrid navigation values is calculated by comparison with respective threshold values.

**3.** Method according to one of claims 1 and 2, wherein, when calculating the certified navigation values, a Kalman filter is used for calculating error covariances from the navigation data.

**4.** Method according to claim 3, wherein the Kalman filter is an invariant Kalman filter.

**5.** Method according to any one of claims 1 to 4, wherein a zero-speed reset of the inertial navigation stage capable of calculating the certified navigation values is performed.

**6.** Method according to any one of claims 1 to 5, wherein the hybrid navigation values are calculated from inertial data coming from measurement sensors, in particular from at least three gyroscopes and at least three accelerometers, in three directions in space, and additional data, particularly from movement models.

7. Inertial navigation system, comprising a navigation data acquisition unit (1) and a first navigation stage (2) capable of calculating hybrid navigation values through the fusion of navigation data, **characterised in that** it furthermore includes a second navigation stage (3) able to calculate certified navigation values independently of the hybrid navigation values, said certified navigation values being certified with a geolocation error limit, and **in that** the second navigation stage computes a first permissible geolocation error limit corresponding to a geolocation with a predetermined probability of error, and a second permissible geolocation error limit derived from the first geolocation error limit and a deviation between the hybrid navigation values and the certified navigation values.

# FIG.1

# FIG.2

# FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5760737 A

- WO 2012031940 A

**Littérature non-brevet citée dans la description**

- *GLOBAL POSITIONING SYSTEM STANDARD POSITIONING SERVICE PERFORMANCE STANDARD*, 2020